# FASCICULE DE BREVET EUROPEEN

(11) **EP 1 417 526 B1**
(45) Date de publication et mention de la délivrance du brevet: **27.12.2006**
(21) Numéro de dépôt: 02724407.8
(22) Date de dépôt: 09.04.2002
(51) Int. Cl.: G02B 21/00

(54) **ENSEMBLE MODIFIABLE DE TROUS MICROSCOPIQUES**
VERÄNDERBARE ANORDNUNG VON MIKROSKOPISCHEN LÖCHERN
MODIFIABLE ASSEMBLY OF MICROSCOPIC APERTURES

(30) Priorité: 10.04.2001 FR 0104841; 18.09.2001 WO PCT/FR01/02890; 21.01.2002 FR 0200780
(43) Date de publication de la demande: 12.05.2004
(73) Titulaire: Lauer, Vincent, 94130 Nogent sur Marne (FR)
(72) Inventeur: Lauer, Vincent, 94130 Nogent sur Marne (FR)
(86) Numéro de dépôt international: PCT/FR2002/001222
(87) Numéro de publication internationale: WO 2002/084367

(56) Documents cités:
- DE-A- 19 513 350
- DE-A- 19 807 716
- DE-C- 19 929 958
- PATENT ABSTRACTS OF JAPAN vol. 017, no. 653 (E-1469), 3 décembre 1993 (1993-12-03) & JP 05 217536 A (HITACHI LTD), 27 août 1993 (1993-08-27)
- PATENT ABSTRACTS OF JAPAN vol. 1998, no. 02, 30 janvier 1998 (1998-01-30) -& JP 09 265049 A (DAINIPPON SCREEN MFG CO LTD), 7 octobre 1997 (1997-10-07)
- SASAKI K ET AL: "THREE-DIMENSIONAL SPACE- AND TIME-RESOLVED FLUORESCENCE SPECTROSCOPY" APPLIED SPECTROSCOPY, THE SOCIETY FOR APPLIED SPECTROSCOPY. BALTIMORE, US, vol. 45, no. 6, 1 juillet 1991 (1991-07-01), pages 1041-1045, XP000216457 ISSN: 0003-7028
- PATENT ABSTRACTS OF JAPAN vol. 2000, no. 09, 13 octobre 2000 (2000-10-13) -& JP 2000 180606 A (FUJI XEROX CO LTD), 30 juin 2000 (2000-06-30)

## Description

### Domaine technique

L'invention concerne un trou microscopique ou un ensemble de trous microscopiques (en anglais "pinhole"), le nombre de ces trous et/ou leur taille pouvant être aisément modifié. Un tel ensemble de trous microscopiques est destiné à être utilisé pour diverses applications en optique, et en particulier en microscopie confocale.

### Technique antérieure.

En microscopie confocale on utilise usuellement deux types de trous microscopiques:
- des trous de taille fixe: pour modifier la taille d'un trou, il est nécessaire de le remplaçer par un autre. Typiquement plusieurs trous microscopiques peuvent être montés sur une roue ayant une position correspondant à l'utilisation de chacun de ces trous. Le mouvement de la roue doit être très précis.
- des trous de taille variable: fonctionnant sur le principe du diaphragme à iris, ils nécessitent au moins trois lames qui forment un trou en se croisant et sont coûteux du fait de la relative complexité du mécanisme.

Classiquement, les systèmes de microscopie confocale nécessitent l'utilisation d'un seul trou microscopique. Par exemple le premier mode de réalisation de la demande de brevet français numéro 0103860 du 22 mars 2001, ainsi que le microscope décrit sur la figure 3 du brevet US 5,978,095 ou le microscope décrit dans la demande de brevet US 5,162,941.

D'autres systèmes de microscopie confocale nécessitent l'utilisation d'un réseau de trous microscopiques. Par exemple les microscopes décrits par la figure 1 du brevet numéro US 5,239,178 ou la figure 3 du brevet US 5,978,095, ou les systèmes à disque de Nipkow.

Dans certains modes de réalisation d'un microscope tel que celui décrit dans la demande de brevet français numéro 0103860 du 22 mars 2001, un réseau de trous microscopiques doit être positionné avec une grande précision, ce qui est difficile en utilisant une technique simple consistant à échanger l'ensemble du réseau. Lorsque des trous microscopiques « uniques » sont simplement échangés comme sur certains microscopes confocaux monopoint, leur positionnement précis est également difficile. De plus les systèmes d'échange de réseaux de trous microscopiques sont nécessairement encombrants, puisque leur encombrement est la somme des encombrements de chaque réseau pouvant être échangé.

Dans le cas des microscopes utilisant un réseau de trous microscopiques la taille et la densité des trous ne peuvent usuellement pas être modifiés. Pourtant cette modification est souhaitable pour adapter la taille des trous à la longueur d'onde étudiée. Le brevet numéro US 6,002,509 apporte une solution à ce problème dans le cas d'un microscope à disque de Nipkow. Toutefois cette solution nécessite le remplacement du réseau de trous par un réseau de points réfléchissants. Quand la technique utilisée consiste à utiliser des points réfléchissants réalisés par un traitement multicouches, chaque longueur d'onde correspond à une taille et une densité donnés des points réfléchissants. Il n'est alors pas possible de modifier la taille ou la densité des trous du trou à longueur d'onde donnée, et le nombre de tailles de trous différentes est limité par les performances du traitement multicouches. Quand la technique utilisée consiste à introduire plusieurs couronnes concentriques sur le disque de Nipkow, un déplacement du disque, peu pratique, est nécessaire, et l'encombrement du disque devient rapidement excessif. La technique est difficilement adaptable à des systèmes utilisant un réseau fixe de trous microscopiques.

### Description de l'invention

L'invention a pour objet un ensemble de un ou plusieurs trous microscopiques de taille et/ou de nombre variable, dont les modifications sont obtenues par une méthode simplifiée, précise et peu coûteuse. En particulier, un objet de l'invention est de réaliser un trous microscopiques modifiable sans problèmes de positionnement et d'un encombrement réduit. Par "trous" on entend trous au sens optique du terme, c'est-à-dire petites zones traversables par la lumière, non nécessairement vides. Un "trou" peut être par exemple une interruption de couche opaque déposée sur du verre.

A cet effet, l'invention a pour objet un Réseau de trous modifiable pour le filtrage d'un faisceau lumineux, comprenant:
- une plaque fixe (310) portant un premier réseau de trous,
- une plaque mobile (300) portant un second réseau de trous, chaque trou du réseau modifiable étant formé par la superposition d'un trou (311) de la plaque fixe et d'un trou (301) de la plaque mobile,
- un moyen pour faire glisser la plaque mobile par rapport à la plaque fixe, pour faire passer la plaque mobile d'une première position dans laquelle chaque trou de la plaque fixe est superposé à un trou correspondant de la plaque mobile, à une deuxième position dans laquelle chaque trou de la plaque fixe est superposé à un trou correspondant de la plaque mobile,
caractérisé par les faits suivants :
- les trous dudit réseau modifiable sont de taille microscopique, adaptée pour le filtrage d'un faisceau lumineux dans un microscope confocal,
- les trous de la plaque mobile qui sont superposés aux trous de la plaque fixe dans la deuxième position diffèrent des trous de la plaque mobile qui sont superposés aux trous de la plaque fixe dans la première position, et
- les trous de la plaque mobile qui sont superposés aux trous de la plaque fixe dans la deuxième position ont une taille différente de la taille des trous de la plaque mobile qui sont superposés aux trous de la plaque fixe dans la première position,
pour que la taille des trous du réseau modifiable quand la plaque mobile est dans la seconde position diffère de la taille des trous du réseau modifiable quand la plaque mobile est dans la première position.

Cette disposition particulière permet de simplifier la réalisation du système et rend possible la réalisation de réseaux de trous microscopiques modifiables, alors que par exemple les diaphragmes à iris ne sont conçus que pour un trou microscopique modifiable unique.

Un ensemble modifiable de trous microscopiques peut également être obtenu par un système échangeant physiquement deux ensembles de trous microscopiques réalisés sur des plaques différentes. Cette solution est utilisée dans certains microscopes confocaux monopoint. La présente invention se distingue de cette solution technique simple par l'utilisation de plusieurs plaques superposées, ce qui permet de modifier le réseau de trous microscopiques au moyen de déplacements également microscopiques, et non macroscopiques comme c'est le cas dans l'état de l'art. Ceci simplifie les problèmes de positionnement.

Différentes techniques de réalisation des plaques peuvent être employées. Par exemple, et suivant une caractéristique de l'invention, deux desdites plaques peuvent être des vitres transparentes sur lesquelles lesdits trous microscopiques sont réalisées par dépôt d'une couche opaque par une méthode litographique. Les couches opaques de ces deux plaques peuvent alors être tournées l'une vers l'autre, pour que l'espace les séparant soit aussi réduit que possible. L'avantage de cette technique est que les vitres ont une bonne rigidité (se déforment peu).

Suivant une caractéristique de l'invention, les plaques sont séparées les unes des autres par des couches d'un liquide lubrifiant transparent. En effet, dans le cas contraire, les frottements entre les plaques rendent difficile un fonctionnement correct. Une autre solution est d'utiliser des plaques qui ne se touchent pas les unes les autres, mais cette solution est difficile car elle nécessite une excellente planéité des plaques. Le glissement d'une plaque l'une par rapport à une autre peut en général se faire suivant deux axes. Toutefois, le système est simplifié, selon une caractéristique de l'invention, si ce glissement se fait suivant seulement un axe. Dans ce cas, il est possible d'utiliser un rail de guidage pour faciliter le maintien d'un positionnement relatif correct des plaques. Toutefois un tel rail est coûteux et pose des problèmes de positionnement. Pour faciliter le positionnement relatif des plaques, et selon une caractéristique de l'invention, deux plaques adjacentes glissant l'une par rapport à l'autre suivant un axe sont positionnées l'une par rapport à l'autre par des rails de guidage microscopiques. Un rail microscopique étant fragile, il est préférable, suivant une caractéristique de l'invention, d'utiliser plusieurs rails de guidage microscopiques. Ces rails peuvent par exemple être réalisés par litographie.

Suivant une caractéristique de l'invention, la plaque mobile est déplacée au moyen d'un positionneur linéaire en axe. Cette solution est préférée lorsque une technique à base de déplacements discrets est utilisée. Il peut également être nécessaire de déplacer une des plaques au moyen d'un positionneur deux axes. Cette solution est celle qui permet le maximum de flexibilité.

### Description rapide des figures.

Les figures 1 à 4 illustrent le principe de l'invention en montrant un seul trou microscopique. La figure 1 représente une plaque fixe utilisée. La figure 2 représente une plaque mobile. La figure 3 représente la superposition des deux plaques, formant un trou microscopique unique de taille réduite. La figure 4 représente en coupe la même superposition.

La figure 5 représente une plaque mobile utilisée dans un premier mode de réalisation. La figure 6 représente une plaque fixe utilisée dans ce mode de réalisation.

La figure 7 représente une plaque mobile utilisée dans un second mode de réalisation. La figure 8 représente une plaque fixe utilisée dans ce second mode de réalisation. La figure 9 représente une plaque mobile utilisée dans une variante de ce second mode de réalisation.

La figure 10 représente un dispositif utilisé pour éviter des fuites du liquide séparant les plaques, le dispositif étant rempli sous vide. La figure 11 représente un dispositif similaire mais comportant un trop-plein ayant une prise d'air.

Les figures 128 à 14 se rapportent à un mode de guidage des plaques par rails microscopiques. La figure 12 représente une plaque mobile portant des rails. La figure 13 représente une plaque mobile portant des rails correspondants à ceux de la figure 12. La figure 14 représente en coupe l'assemblage de deux plaques réalisées sur des plaques de verre épaisses.

### Principe de l'invention.

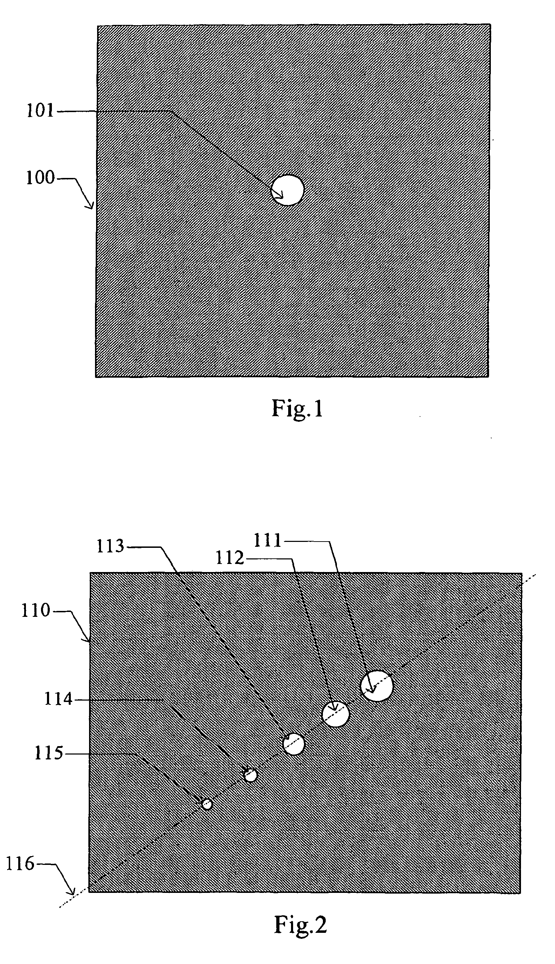

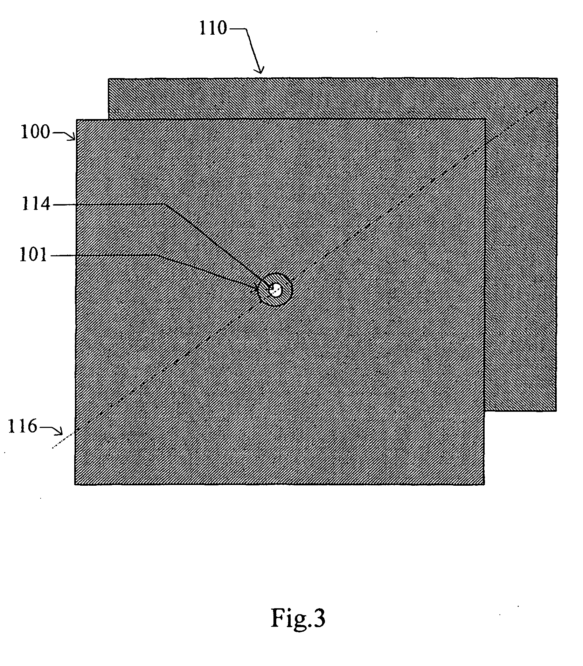

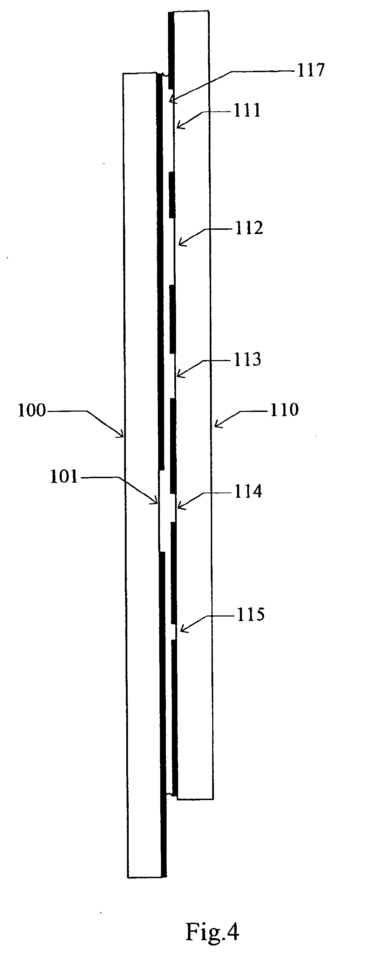

Le principe de l'invention est d'obtenir par glissement pas par pas d'une plaque mobile 110 constituant un deuxième ensemble intermédiaire, par rapport à une plaque fixe 100 constituant un premier ensemble intermédiaire, au moins un trou microscopique de taille modifiable et en forme de disque. La figure 1 représente la plaque 100 comportant un trou 101. La figure 2 représente la plaque 110 comportant des trous 111, 112, 113, 114, 115 alignés sur un axe 116. Le trou microscopique modifiable est constitué par les deux plaques A et B placées l'une contre l'autre. La figure 3 représente le trou microscopique modifiable obtenu lorsque le trou 114 est superposé au trou 101. La figure 4 représente la même superposition en coupe suivant un plan passant par l'axe 116. Dans la position des plaques qui est représentée sur les figures 3 et 4, seul le trou 114 peut être traversé par la lumière, et le diamètre du trou modifiable est celui du trou 114.

La plaque 110 doit être montée sur un positionneur permettant de la déplacer suivant la direction de l'axe 116 passant par l'ensemble des trous 111 à 115. En faisant glisser la plaque 110 par rapport à la plaque 100, à l'aide du positionneur, on peut superposer un quelconque des trous 111 à 115 au trou 101, et donc obtenir cinq diamètres distincts du trou microscopique modifiable. Lorsque par exemple le trou 113, au lieu du trou 114, est superposé au trou 101, le diamètre du trou modifiable est augmenté et devient égal au diamètre du trou 113.

Les trous microscopiques de la plaque 110 ne sont pas nécessairement alignés sur une même droite, toutefois cette solution permet de ne déplacer la plaque 110 que suivant un axe, ce qui minimise les coûts. D'une manière générale, on peut obtenir autant de trous de caractéristiques différentes qu'il y a de trous pratiqués dans la plaque 110. Un rail de guidage peut être utilisé pour que le déplacement de la plaque B par rapport à la plaque A soit restreint à la direction de l'axe 116.

Les plaques 100 et 110 peuvent être des plaques en verres dont les parties opaques sont des couches métalliques obtenues par un procédé litographique. Ces couches métalliques sont figurées par des traits épais sur la figure 4. Les deux plaques sont séparées par une fine couche 117 de liquide optique, par exemple de l'huile, afin d'éviter tout frottement solide.

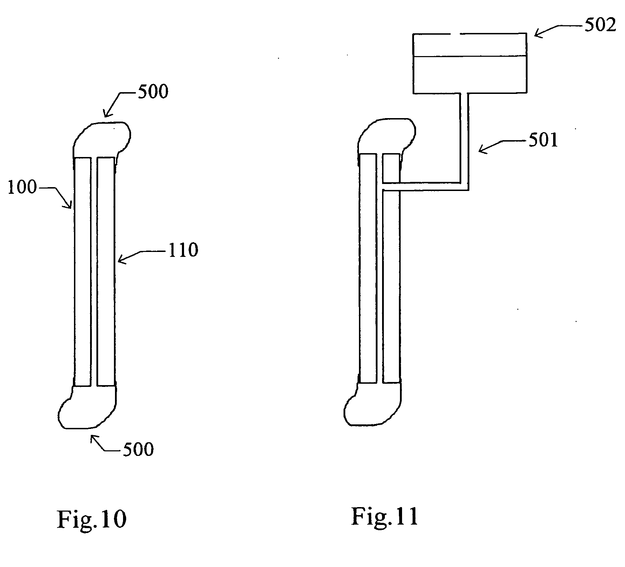

Lorsque le liquide optique se maintient uniquement par capillarité comme indiqué sur la figure 4, les qualités de la couche sont susceptibles de se dégrader avec le temps par évaporation partielle, et le liquide est également susceptible de se répandre dans des parties du système optique autres que la zone ou sa présence est requise. Afin d'éviter ces problèmes le système peut être rendu étanche comme indiqué sur la figure 10 au moyen d'une fermeture souple 500, par exemple en plastique, qui ferme l'ensemble du système. Le liquide peut alors être injecté sous vide entre les deux plaques et dans la zone comprise à l'intérieur de la fermeture souple 500. Ce dispositif permet de concilier le mouvement des plaques 110 et 100 avec l'absence de fuites de liquide. Une alternative au remplissage sous vide est le système de trop-plein représenté sur la figure 11. Un tube 501 mène dans un réservoir 502 doté d'une prise d'air et surélevé et assure le maintien d'un niveau de liquide optique dans la zone comprise entre les plaques.

Dans l'ensemble des modes de réalisation on utilisera de préférence des plaques en verre avec des couches opaques obtenues par litographie et tournées l'une vers l'autre, séparées par un liquide optique et équipées d'un système évitant les fuites de liquide. Ces aspects technologiques ne seront pas rappelés dans la suite des explications.

### Premier mode de réalisation.

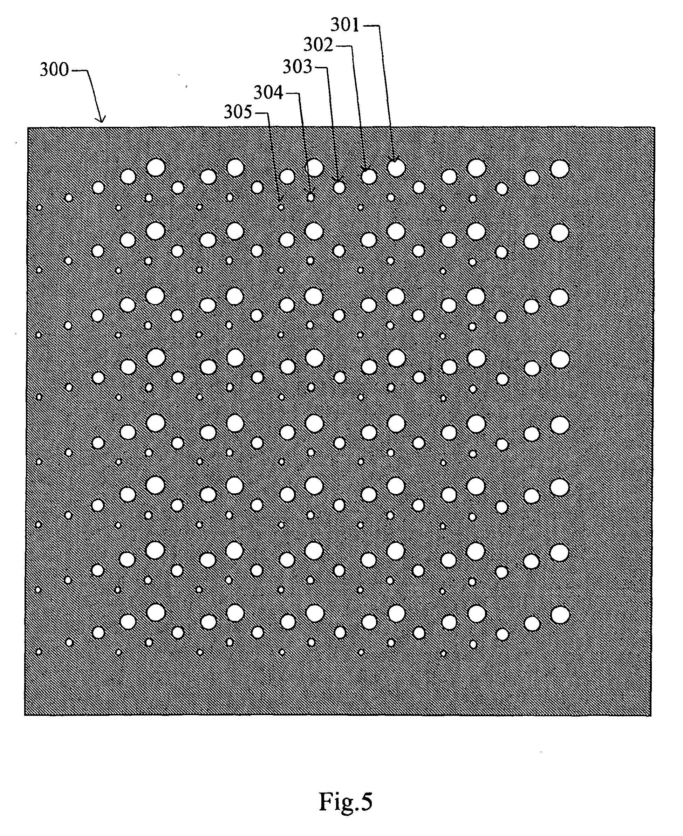

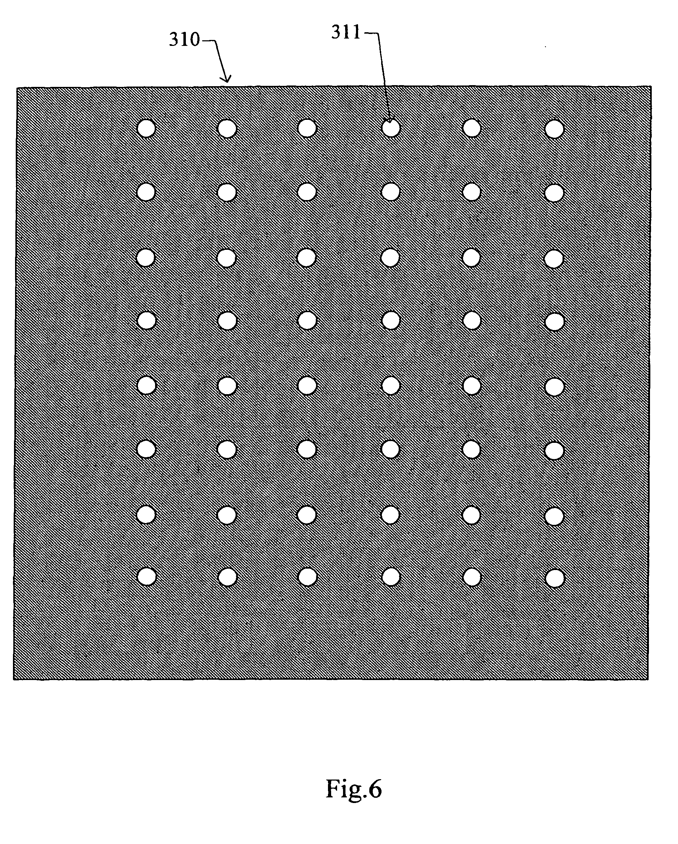

Ce premier mode de réalisation permet d'obtenir un réseau de trous microscopiques de taille modifiable par glissement pas par pas d'une plaque mobile 300 sur une plaque fixe 310. La figure 5 représente un exemple de plaque 300 et la figure 6 représente la plaque 310 correspondante. Le réseau de trous microscopiques modifiables est constitué des plaques 310 et 300 placées l'une contre l'autre. Lorsque le trou 301 de la plaque 300 est superposé au trou 311 de la plaque 310, l'orientation des plaques n'étant pas modifiée par rapport au dessin, le réseau de trous microscopiques modifiables a l'allure de la plaque 310 seule, c'est-à-dire que les trous de la plaque 310 sont laissés libres par la plaque 300. Lorsque le trou 302 de la plaque 300 est superposé au trou 311 de la plaque 310, le diamètre des trous du réseau de trous microscopiques modifiable est diminué. Lorsque les trous 303,304,305 sont successivement superposés au trou 311 de la plaque 310 le diamètre des trous du réseau de trous microscopiques modifiables est à chaque fois diminué. On a donc sur cet exemple un réseau de trous microscopiques modifiables dont les diamètres peuvent prendre 5 valeurs distinctes. D'une manière générale, on peut réaliser sur ce principe un réseau comportant un grand nombre de trous microscopiques pouvant chacun prendre diverses tailles ou formes.

### Second mode de réalisation.

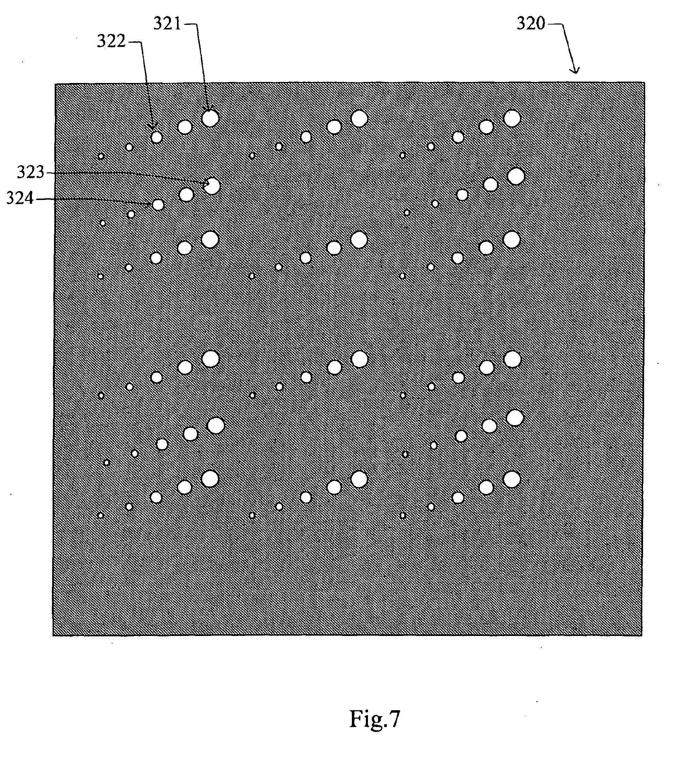

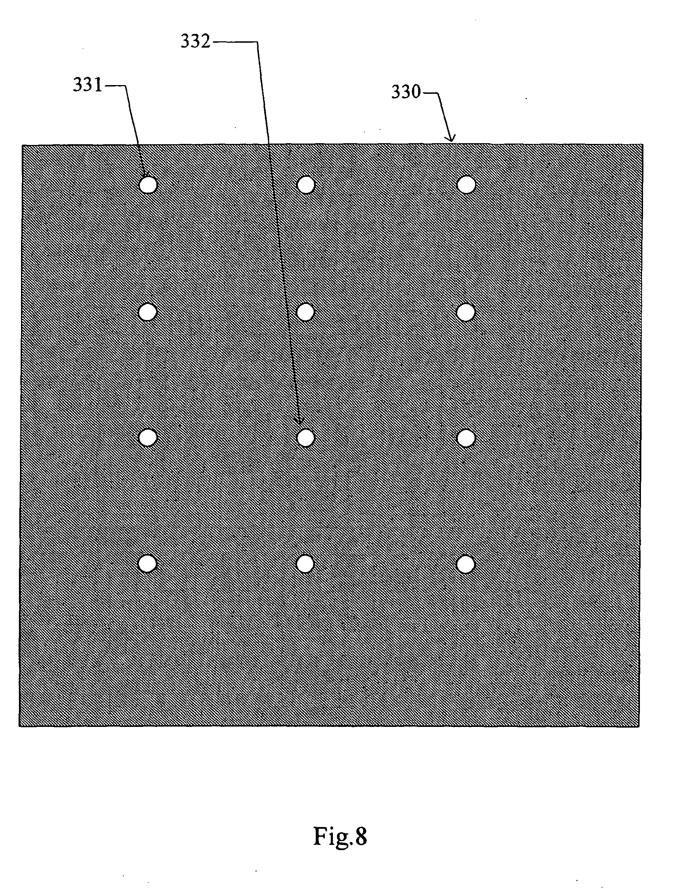

Ce second mode de réalisation permet d'obtenir des trous de taille et de nombre variables par glissement d'une plaque mobile 320 portant un second ensemble intermédiaire de trous, sur une plaque fixe 330 portant un premier ensemble intermédiaire de trous. La figure 7 représente un exemple de plaque 320 utilisée et la figure 8 représente la plaque 330 correspondante. Lorsque le trou 321 de la plaque 320 est superposé au trou 331 de la plaque 330, le réseau de trous microscopiques modifiables a l'allure de la plaque 330 seule, c'est-à-dire que les 12 trous de la plaque 330 sont laissés libres par la plaque 320. Lorsque par exemple le trou 322 de la plaque 320 est superposé au trou 331 de la plaque 330, le diamètre des trous du réseau de trous microscopiques modifiables est diminué mais leur nombre est constant. Lorsque le trou 323 de la plaque 320 est superposé au trou 331 de la plaque 330, le nombre de trous microscopiques de l'ensemble de trous microscopiques modifiables devient égal à 4 au lieu de 12, leur diamètre étant égal à celui des trous de la plaque 330, c'est-à-dire que 6 trous de la plaque 330 sont cachés par la partie opaque de la plaque 320, et 4 autres trous sont laissés libres. Lorsque le trou 324 de la plaque 320 est superposé au trou 331 de la plaque 330, l'ensemble modifiable de trous microscopiques comporte 4 trous de diamètre réduit. Cet exemple constitue donc un ensemble modifiable de trous microscopiques, le nombre de trous microscopiques pouvant être égal à 4 ou 12, et le diamètre de chaque trou pouvant prendre 5 valeurs distinctes. D'une manière générale on peut réaliser sur ce principe un réseau modifiable comportant un grand nombre de trous, dont la taille et le nombre sont tous deux modifiables.

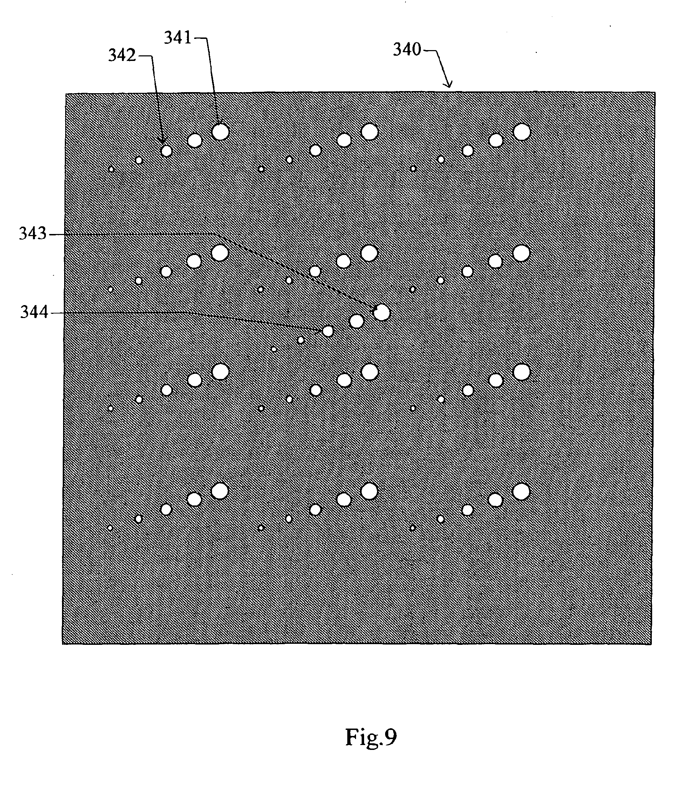

Un autre exemple de ce mode de réalisation utilise la même plaque 330 mais le second ensemble intermédiaire est constitué par la plaque 340 représentée sur la figure 9. Lorsque le trou 341 de la plaque 340 est superposé au trou 331 de la plaque 330, le réseau de trous microscopiques modifiables a l'allure de la plaque 330 seule, c'est-à-dire que les 12 trous de la plaque 330 sont laissés libres par la plaque 340. Lorsque par exemple le trou 342 de la plaque 340 est superposé au trou 331 de la plaque 330, le diamètre des trous du réseau de trous microscopiques modifiables est diminué mais leur nombre est constant. Lorsque le trou 343 de la plaque 340 est superposé au trou 332 de la plaque 330, le nombre de trous microscopiques de l'ensemble de trous microscopiques modifiables devient égal à 1 au lieu de 12, leur diamètre étant égal à celui des trous de la plaque 330, c'est-à-dire que 11 trous de la plaque 330 sont cachés par la partie opaque de la plaque 340, et 1 autre trou est laissé libre. Lorsque le trou 344 de la plaque 340 est superposé au trou 332 de la plaque 330, l'ensemble modifiable de trous microscopiques comporte 1 seul trou de diamètre réduit. Cet exemple constitue donc un ensemble modifiable de trous microscopiques, le nombre de trous microscopiques pouvant être égal à 1 ou 12, et le diamètre de chaque trou pouvant prendre 5 valeurs distinctes. Ce type de réseau de trous microscopique est particulièrement utile dans un microscope confocal que l'on souhaite pouvoir utiliser à la fois en mode multipoints et en mode monopoint.

### Méthode de guidage et de positionnement des plaques

Dans certains modes de réalisation les plaques portant des trous microscopiques se déplacent en translation les unes par rapport aux autres suivant un axe unique. Par exemple dans le premier mode de réalisation, le deuxième, le quatrième mode de réalisation, mais également dans le cinquième mode de réalisation en ce qui concerne les trois plaques se déplaçant au moyen d'un mécanisme de diaphragme à iris. Cette solution simplifie le système en ce chaque plaque se déplace par rapport à une autre suivant un axe unique. Ainsi qu'indiqué plus haut un rail de guidage peut être utilisé pour guider les plaques. Toutefois, un rail de guidage macroscopique est difficile à réaliser avec la précision requise. Afin d'obtenir un bon positionnement des plaques on peut remplacer un tel rail de guidage par un ensemble de rails de guidage microscopiques.

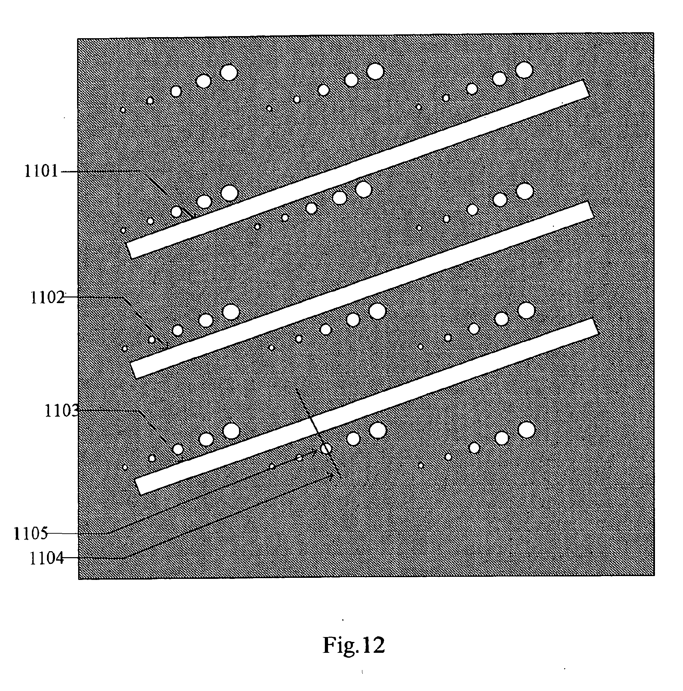

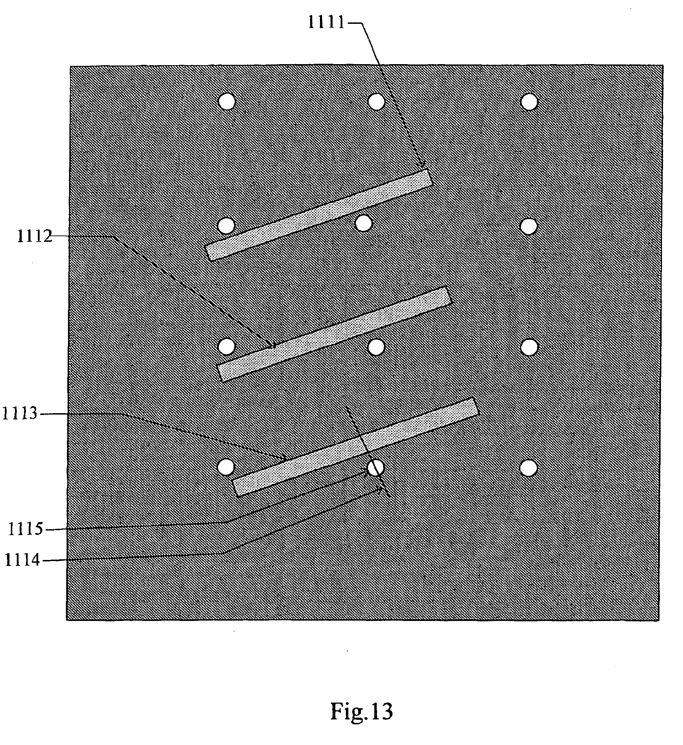

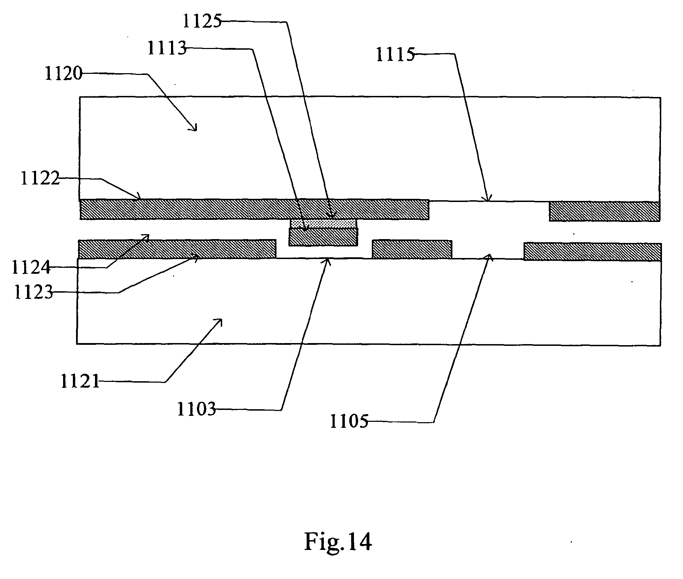

Les figures 12 à 14 illustrent la réalisation d'un ensemble de rails de guidage microsopiques dans un système à deux plaques du type décrit dans le premier mode de réalisation. La figure 12 montre la partie femelle 1101,1102,1103 des rails, réalisés par litographie de la même manière que les trous microscopiques, sur la plaque mobile. La figure 13 montre la partie mâle 1111, 1112, 1113 des rails, réalisés par litographie sur la plaque fixe, mais au moyen d'une couche métallique supplémentaire. La figure 14 montre en coupe l'assemblage des rails 1103 et 1113. La coupe est réalisée suivant un axe de coupe 1114 de la plaque fixe et suivant un axe de coupe 1104 de la plaque mobile, ces deux axes étant supposés superposés dans la position représentée. La plaque fixe en verre 1121 porte une couche métallique 1122 laissant libre le trou microscopique 1115. Elle porte également une couche métallique supplémentaire 1113 constituant la partie mâle du système de guidage. Cette partie mâle est réalisée par litographie et on a également représenté un reste de couche de résine 1125. Cette couche de résine a pour objet de protéger la couche métallique inférieure 1122 lors de la formation du rail 1113. La plaque mobile 1120 porte une couche métallique 1123 laissant libre le trou microscopique 1105 et la partie femelle 1103 du rail de guidage. L'espace 1124 compris entre les deux plaques est rempli d'un liquide lubrifiant permettant d'éviter les frottements solides. La partie mâle 1113 s'encastre dans la rainure 1103 pour guider le déplacement. La superposition des trous microscopiques 1115 et 1105 produit un trou microscopique de taille réduite.

Sur la figure 13 les rails de guidage 1111, 1112, 1113 matérialisent également la direction du mouvement de la plaque mobile, qui est non parallèle aux vecteurs directeurs du réseau de trous microscopiques de la plaque fixe, représenté sur la même figure.

### Applications industrielles

Le présent ensemble de trous microscopiques peut être utilisé dans un microscope confocal à éclairage multipoint ou dans un microscope confocal destiné à alterner les deux modes d'éclairage. Par exemple si un ensemble de trous microscopiques du type décrit dans le quatrième mode de réalisation remplace l'ensemble de trous microscopiques utilisé dans le système décrit par la figure 1 du brevet numéro US 5,239,178 il devient possible de modifier la taille et le nombre de ces trous microscopiques, et éventuellement d'alterner entre un mode de fonctionnement multipoint et monopoint. De même, le réseau de trous microscopiques du quatrième mode de réalisation de la présente invention peut remplacer, avec le même effet, le réseau de trous microscopiques utilisé sur la figure 3 du brevet US 5,978,095. En utilisant un réseau modifiable de trous microscopiques suivant la présente invention dans le microscope décrit par un des deux premiers modes de réalisation de la demande de brevet français numéro 0103860 du 22 mars 2001, on peut aisément modifier le diamètre des trous microscopiques ou leur nombre, ce qui affecte le compromis vitesse/résolution ou vitesse/profondeur de pénétration dans l'échantillon. Le trou microscopique décrit dans un des deux premiers modes de réalisation de la présente invention peut par ailleurs remplacer les trous microscopiques interchangeables ou les diaphragmes "iris" usuellement utilisés dans les microscopes confocaux monopoints à balayage laser.

Un autre exemple de ce mode de réalisation utilise la même plaque 330 mais le second ensemble intermédiaire est constitué par la plaque 340 représentée sur la figure 9. Lorsque le trou 341 de la plaque 340 est superposé au trou 331 de la plaque 330, le réseau de trous microscopiques modifiables a l'allure de la plaque 330 seule, c'est-à-dire que les 12 trous de la plaque 330 sont laissés libres par la plaque 340. Lorsque par exemple le trou 342 de la plaque 340 est superposé au trou 331 de la plaque 330, le diamètre des trous du réseau de trous microscopiques modifiables est diminué mais leur nombre est constant. Lorsque le trou 343 de la plaque 340 est superposé au trou 332 de la plaque 330, le nombre de trous microscopiques de l'ensemble de trous microscopiques modifiables devient égal à 1 au lieu de 12, leur diamètre étant égal à celui des trous de la plaque 330, c'est-à-dire que 11 trous de la plaque 330 sont cachés par la partie opaque de la plaque 340, et 1 autre trou est laissé libre. Lorsque le trou 344 de la plaque 340 est superposé au trou 332 de la plaque 330, l'ensemble modifiable de trous microscopiques comporte 1 seul trou de diamètre réduit. Cet exemple constitue donc un ensemble modifiable de trous microscopiques, le nombre de trous microscopiques pouvant être égal à 1 ou 12, et le diamètre de chaque trou pouvant prendre 5 valeurs distinctes. Ce type de réseau de trous microscopique est particulièrement utile dans un microscope confocal que l'on souhaite pouvoir utiliser à la fois en mode multipoints et en mode monopoint.

### Quatrième mode de réalisation.

Ce cinquième mode de réalisation permet l'obtention de trous carrés de taille continûment variable. Il utilise deux plaques identiques et représentées par exemple par la figure 10. Lorsque le trou 401 de la première plaque est exactement superposé au trou 401 de la deuxième plaque on obtient un ensemble de trous carrés équivalent à première plaque seule. Lorsque les deux plaques sont déplaçées l'une par rapport à l'autre suivant l'axe 402, la taille des trous carrés résultant de la superposition des plaques est diminuée.

### Cinquième mode de réalisation.

Ce cinquième mode de réalisation est particulièrement adapté au cas ou une densité élevée de trous microscopiques est recherchée. Dans une version de base, il nécessite l'utilisation de 3 plaques qui se déplacent continument les unes par rapport aux autres. Elles sont entraînées au moyen d'un dispositif de diaphragme à iris modifié pour compenser la rotation de l'ensemble. Les trous microscopiques sont hexagonaux.

Les trois plaques portent des réseaux de trous identiques qui, dans une position de référence, sont superposés les uns aux autres. La figure 13 montre une plaque 1000 comportant des trous microscopiques, par exemple 1001. Les pointillés, par exemple 1002, délimitent des emplacements hexagonaux ne portant pas de trou. Dans la position de référence, l'allure de l'ensemble modifiable de trous microscopiques est la même que l'allure de chacune des plaques et est donc représentée par la figure 13.

La taille des trous de l'ensemble modifiable de trous microscopiques est modifiée en déplaçant les plaques les unes par rapport aux autres de la manière indiquée par la figure 14. Cette figure représente une partie du réseau de trous microscopiques. Sur la figure, les pointillés représentent les limites des trous microscopiques de chacune des trois plaques et on a représenté en blanc l'intersection de ces trous, qui constitue le trou effectif du réseau modifiable. Les flèches montrent la direction du déplacement des plaques à partir de la position de référence. En déplaçant les plaques dans le sens des flèches on diminue continûment la largeur des trous. La forme des trous de l'ensemble modifiable de trous microscopiques n'est pas modifiée lorsque leur largeur diminue. Ceci est dû au fait qu'il y a 3 plaques, que les trous ont 2x3=6 cotés, et que les directions du déplacement sont suivant des médiatrices des hexagones.

Dans une version permettant de modifier également la densité de trous microscopiques, une quatrième plaque est nécessaire. Cette plaque est représentée sur la figure 15. L'ensemble de trous microscopiques modifiable obtenu à l'aide de trois plaques et représenté sur la figure 13 en position de référence constitue un premier ensemble intermédiaire. La plaque de la figure 15 constitue un second ensemble intermédiaire. Lorsque le trou 1010 de la plaque de la figure 15 est superposé au trou 1001 du premier ensemble intermédiaire de la figure 13, la densité de trous microscopiques est maximale. Lorsque le trou 1013 de la plaque de la figure 15 est superposé au trou 1001 du premier ensemble intermédiaire de la figure 13, le nombre de trous microscopiques par unité de surface est divisé par 4. Lorsque le trou 1012 de la plaque de la figure 15 est superposé au trou 1001 du premier ensemble intermédiaire de la figure 13, le nombre de trous microscopiques par unité de surface est divisé par 9. Lorsque le trou 1011 de la plaque de la figure 15 est superposé au trou 1001 du premier ensemble intermédiaire de la figure 13, le nombre de trous microscopiques par unité de surface est divisé par 16.

L'entraînement des trois plaques identiques représentées figure 13 peut se faire au moyen d'un système d'enraînement de diaphragme à iris représenté sur les figures 16 et 17. Les plaques de la figure 13 sont les plaques 1040, 1041, 1042 représentées sur la figure 17. Ces plaques sont des feuilles métalliques tendues sur des bagues de maintien circulaires 1022, 1021, 1020 et portant des trous réalisés par exemple par perçage au laser. Ces trois bagues de fixation sont reliées à deux bagues de commande 1023, 1024. Par exemple, la bague interne 1020 est reliée à la bague de commande 1023 par une barre 1028 tournant librement autour d'un axe 1029 fixé dans la bague de commande 1023. La bague interne 1020 est reliée à la bague de commande 1024 par une barre 1026 tournant librement autour d'un axe 1027 fixé dans la bague de commande 1024. Le logement 1031 de l'axe 1027 est surdimensionné de manière à pouvoir conjuguer une rotation et une translation par rapport à l'axe 1027. Un tirant 1030 est utilisé pour maintenir le logement 1031 en butée sur l'axe 1027. Les deux autres bagues de maintien sont liées de manière similaire aux bagues de commande. Lorsque les deux bagues de commande tournent simultanément en sens opposé et d'un angle égal, les trois plaques se déplacent en translation avec un angle de 120 degrés entre les directions de chaque axe de déplacement, comme indiqué sur la figure 14.

La figure 17 représente également la quatrième plaque 1051 qui est une feuille tendue sur une bague de maintien 1050. La bague de maintien 1050 est montée sur un positionneur deux axes.

Les plaques 1051 et 1042 sont elles-mêmes plaquées sur des plaques de verre épaisses 1052 et 1043. Lorsque l'ensemble du système est en position les deux plaques de verre 1052 et 1043 évitent des déformations des feuilles (plaques) 1042,1041,1040,1051 portant des trous microscopiques.

### Méthode de guidage et de positionnement des plaques

Dans certains modes de réalisation les plaques portant des trous microscopiques se déplacent en translation les unes par rapport aux autres suivant un axe unique. Par exemple dans le premier mode de réalisation, le deuxième, le quatrième mode de réalisation, mais également dans le cinquième mode de réalisation en ce qui concerne les trois plaques se déplaçant au moyen d'un mécanisme de diaphragme à iris. Cette solution simplifie le système en ce chaque plaque se déplace par rapport à une autre suivant un axe unique. Ainsi qu'indiqué plus haut un rail de guidage peut être utilisé pour guider les plaques. Toutefois, un rail de guidage macroscopique est difficile à réaliser avec la précision requise. Afin d'obtenir un bon positionnement des plaques on peut remplaçer un tel rail de guidage par un ensemble de rails de guidage microscopiques.

Les figures 18 à 20 illustrent la réalisation d'un ensemble de rails de guidage microsopiques dans un système à deux plaques du type décrit dans le premier mode de réalisation. La figure 18 montre la partie femelle 1101, 1102, 1103 des rails, réalisés par litographie de la même manière que les trous microscopiques, sur la plaque mobile. La figure 19 montre la partie mâle 1111, 1112, 1113 des rails, réalisés par litographie sur la plaque fixe, mais au moyen d'une couche métallique supplémentaire. La figure 20 montre en coupe l'assemblage des rails 1103 et 1113. La coupe est réalisée suivant un axe de coupe 1114 de la plaque fixe et suivant un axe de coupe 1104 de la plaque mobile, ces deux axes étant supposés superposés dans la position représentée. La plaque fixe en verre 1120 porte une couche métallique 1122 laissant libre le trou microscopique 1115. Elle porte également une couche métallique supplémentaire 1113 constituant la partie mâle du système de guidage. Cette partie mâle est réalisée par litographie et on a également représenté un reste de couche de résine 1125. Cette couche de résine a pour objet de protéger la couche métallique inférieure 1122 lors de la formation du rail 1113. La plaque mobile 1120 porte une couche métallique 1123 laissant libre le trou microscopique 1105 et la partie femelle 1103 du rail de guidage. L'espace 1123 compris entre les deux plaques est rempli d'un liquide lubrifiant permettant d'éviter les frottements solides. La partie mâle 1113 s'encastre dans la rainure 1103 pour guider le déplacement. La superposition des trous microscopiques 1115 et 1105 produit un trou microscopique de taille réduite.

Cette méthode de guidage peut être adaptée au cas ou les plaques sont des feuilles métalliques, comme dans le cinquième mode de réalisation. Dans ce cas des rails mâle ou femelle peuvent être réalisés de chaque coté de chaque feuille. Les plaques en verre sont alors remplaçées par les feuilles métalliques. Le schéma de la figure 21 est équivalent à celui de la figure 20 mais illustre le cas de plaques constituées par de fines feuilles métalliques. La plaque 1134 porte le rail mâle 1132 séparé de la plaque par une couche de résine protectrice 1133 utilisée pour la réalisation par litographie du rail 1132. La plaque 1137 porte le rail femelle 1138 réalisé par litographie dans une couche métallique 1135 séparée de la plaque par une résine 1139. L'espace entre les deux plaques est rempli d'un liquide lubrifiant. On n'a représenté de rail de guidage que d'un coté de chaque plaque mais il est possible d'en réaliser de chaque coté de chaque plaque. Dans le cas du cinquième mode de réalisation, les rails de guidage qui séparent chaque feuille métallique guidée des deux feuilles adjacentes participent au maintien de la forme des feuilles métallique et à l'évitement des déformations. Bien entendu la feuille numéro 1051 de la figure 17 ne peut être guidée par cette méthode que si son mouvement est restreint à une seule direction.

### Applications industrielles

Le présent ensemble de trous microscopiques peut être utilisé dans un microscope confocal à éclairage monopoint ou multipoint ou dans un microscope confocal destiné à alterner les deux modes d'éclairage. Par exemple si un ensemble de trous microscopiques du type décrit dans le quatrième mode de réalisation remplace l'ensemble de trous microscopiques utilisé dans le système décrit par la figure 1 du brevet numéro US 5,239,178 il devient possible de modifier la taille et le nombre de ces trous microscopiques, et éventuellement d'alterner entre un mode de fonctionnement multipoint et monopoint. De même, le réseau de trous microscopiques du quatrième mode de réalisation de la présente invention peut remplacer, avec le même effet, le réseau de trous microscopiques utilisé sur la figure 3 du brevet US 5,978,095. En utilisant un réseau modifiable de trous microscopiques suivant la présente invention dans le microscope décrit par un des deux premiers modes de réalisation de la demande de brevet français numéro 0103860 du 22 mars 2001, on peut aisément modifier le diamètre des trous microscopiques ou leur nombre, ce qui affecte le compromis vitesse/résolution ou vitesse/profondeur de pénétration dans l'échantillon. Le trou microscopique décrit dans un des deux premiers modes de réalisation de la présente invention peut par ailleurs remplaçer les trous microscopiques interchangeables ou les diaphragmes "iris" usuellement utilisés dans les microscopes confocaux monopoints à balayage laser.

## Revendications

1. Réseau de trous modifiable de taille microscopique, adaptée pour le filtrage d'un faisceau lumineux dans un microscope confocal, comprenant:
- une plaque fixe (310) portant un premier réseau de trous,
- une plaque mobile (300) portant un second réseau de trous, chaque trou du réseau modifiable étant formé par la superposition d'un trou (311) de la plaque fixe et d'un trou (301) de la plaque mobile,
- un moyen pour faire glisser la plaque mobile par rapport à la plaque fixe, pour faire passer la plaque mobile d'une première position dans laquelle chaque trou de la plaque fixe est superposé à un trou correspondant de la plaque mobile, à une deuxième position dans laquelle chaque trou de la plaque fixe est superposé à un trou correspondant de la plaque mobile,
**caractérisé par** les faits suivants :
- les trous de la plaque mobile qui sont superposés aux trous de la plaque fixe dans la deuxième position diffèrent des trous de la plaque mobile qui sont superposés aux trous de la plaque fixe dans la première position, et
- les trous de la plaque mobile qui sont superposés aux trous de la plaque fixe dans la deuxième position ont une taille différente de la taille des trous de la plaque mobile qui sont superposés aux trous de la plaque fixe dans la première position,
pour que la taille des trous du réseau modifiable quand la plaque mobile est dans la seconde position diffère de la taille des trous du réseau modifiable quand la plaque mobile est dans la première position.

2. Réseau modifiable de trous microscopiques suivant la revendication 1, la plaque mobile glissant suivant un seul axe et les différents trous microscopiques de la plaque mobile (301, 302, 303, 304, 305) correspondant à un même trou microscopique de la plaque fixe étant alignés suivant cet axe.

3. Réseau modifiable de trous microscopiques suivant une des revendications 1 ou 2, ledit axe (1112) étant non parallèle aux vecteurs directeurs du premier réseau de trous microscopiques.

4. Réseau modifiable de trous microscopiques suivant une des revendications 2 ou 3, la plaque mobile et la plaque fixe étant positionnées l'une par rapport à l'autre par des rails de guidage microscopiques (1101, 1102, 1103, 1111, 1112, 1113).

5. Réseau modifiable de trous microscopiques suivant la revendication 4, les rails de guidage microscopiques étant réalisés par lithographie.

6. Réseau modifiable de trous microscopiques suivant une des revendications 1 à 5, la plaque mobile étant séparée de la plaque fixe par une couche d'un liquide lubrifiant transparent.

7. Réseau modifiable de trous microscopiques suivant une des revendications 1 à 6, la plaque mobile et la plaque fixe étant constituées par des vitres transparentes sur lesquelles les réseaux de trous sont réalisés par litographie.

## Claims

1. Modifiable array of microscopic holes adapted for filtering a light beam in a confocal microscope, comprising :
- a fixed plate (310) carrying a first array of holes,
- a mobile plate (300) carrying a second array of holes, each hole of the modifiable array being formed by the superimposition of a hole (311) of the fixed plate and of a corresponding hole (301) of the mobile plate,
- a means to move the mobile plate along the fixed plate, to move the mobile plate from a first position in which each hole of the fixed plate is superimposed to a corresponding hole of the mobile plate, to a second position in which each hole of the fixed plate is superimposed to a corresponding hole of the mobile plate,
**Characterized by** the following facts:
- the holes of the mobile plate which are superimposed on the holes of the fixed plate in the second position differ from the holes of the mobile plate which are superimposed on the holes of the fixed plate in the first position.
- the holes of the mobile plate which are superimposed on holes of the fixed plate in the second position have a different size than the holes of the mobile plate which are superimposed to the holes of the fixed plate in the first position,
So that the size of the holes of the modifiable array when the mobile plate in the second position differs from the size of the holes of the modifiable array when the mobile plate is in the first position.

2. Modifiable array of microscopic holes according to claim 1, wherein said mobile plate moves along a single axis and wherein the microscopic holes (301, 302, 303, 304, 305) of the mobile plate corresponding to a same microscopic hole of the fixed plate are aligned along that axis.

3. Modifiable array of microscopic holes according to any of claims 1 or 2, wherein said axis (1112) is not parallel to the director vectors of the first array of microscopic holes.

4. Modifiable array of microscopic holes according to any of claims 2 or 3, the mobile plate and the fixed plate being positioned relative to each other by microscopic guide rails (1101, 1102, 1103, 1111, 1112, 1113).

5. Modifiable array of microscopic holes according to claim 4, the microscopic guide rails being produced by lithography.

6. Modifiable array of microscopic holes according to any of claims 1 to 5, the mobile plate being separated from the fixed plate by a layer of transparent lubricating liquid..

7. Modifiable array of microscopic holes according to one of claims 1 to 6, the mobile plate and the fixed plate being made up of transparent windows on which the arrays of holes are produced by lithography.

## Patentansprüche

1. Veränderliches Raster mit Löchern mikroskopischer Größe zur Filterung eines Lichtstrahlenbündels in einem konfokalen Mikroskop, welches umfasst:
- eine fest stehende Platte (310) mit einem ersten Raster,
- eine bewegliche Platte (300) mit einem zweiten Raster, wobei jedes Loch des veränderlichen Rasters durch die Überlagerung eines Lochs (311) der fest stehenden Platte mit einem Loch (301) der bewegliche Platte zustande kommt,
- ein Mittel zum Verschieben der beweglichen Platte im Bezug auf die fest stehende Platte, um die bewegliche Platte aus einer ersten Position, in welcher jedes Loch der fest stehende Platte von einem entsprechenden Loch der beweglichen Platte überlagert wird, in eine zweite Position zu bringen, in welcher jedes Loch der fest stehenden Platte von einem entsprechenden Loch der beweglichen Platte überlagert wird,
**dadurch gekennzeichnet, dass**:
- die Löcher der beweglichen Platte, welche über die Löcher der fest stehenden Platte in der zweiten Position geschoben werden, sich von den Löchern der beweglichen Platte, welche über die Löcher der fest stehenden Platte in der ersten Position geschoben werden, unterscheiden, und
- die Löcher der bewegliche Platte, welche über die Löcher der fest stehenden Platte in der zweiten Position geschoben werden, eine Größe haben, die sich von der Größe der Löcher der beweglichen Platte, welche über die Löcher der fest stehenden Platte in der ersten Position geschoben werden, unterscheidet,
sodass sich die Größe der Löcher des veränderlichen Rasters, wenn die bewegliche Platte in der zweiten Position ist, von der Größe der Löcher des veränderlichen Rasters, wenn die bewegliche Platte in der ersten Position ist, unterscheidet.

2. Veränderliches Raster mit mikroskopischen Löchern gemäß dem Patentanspruch 1, wobei die bewegliche Platte entlang einer einzigen Achse verschoben wird und die verschiedenen, dem jeweiligen mikroskopischen Loch der fest stehenden Platte entsprechenden mikroskopischen Löcher der beweglichen Platte (301, 302, 303, 304, 305) entlang dieser Achse ausgerichtet sind.

3. Veränderliches Raster mit mikroskopischen Löchern gemäß einem der Patentansprüche 1 oder 2, wobei die genannte Achse (1112) nicht parallel zu den Richtungsvektoren des ersten Rasters mit mikroskopischen Löchern verläuft.

4. Veränderliches Raster mit mikroskopischen Löchern gemäß einem der Patentansprüche 2 oder 3, wobei die bewegliche Platte und die fest stehende Platte durch mikroskopische Führungsschienen (1101, 1102, 1103, 1111, 1112, 1113) zueinander positioniert werden.

5. Veränderliches Raster mit mikroskopischen Löchern gemäß dem Patentanspruch 4, wobei die mikroskopischen Führungsschienen mit lithografischen Methoden aufgebracht werden.

6. Veränderliches Raster mit mikroskopischen Löchern gemäß einem der Patentansprüche 1 bis 5, wobei die bewegliche Platte durch eine Schicht aus einem transparenten flüssigen Gleitmittel von der fest stehenden Platte getrennt ist.

7. Veränderliches Raster mit mikroskopischen Löchern gemäß einem der Patentansprüche 1 bis 6, wobei die bewegliche Platte und die fest stehende Platte aus transparenten Glasscheiben bestehen, auf denen die Raster mit lithografischen Methoden aufgebracht werden.
